# FASCICULE DE BREVET EUROPEEN

(11) **EP 2 834 757 B1**
(45) Date de publication et mention de la délivrance du brevet: **08.05.2019**
(21) Numéro de dépôt: 13715322.7
(22) Date de dépôt: 15.03.2013
(51) Int. Cl.: G06F 17/30

(54) **PROCÉDÉ ET DISPOSITIF DE FOURNITURE RAPIDE D'INFORMATION**
VERFAHREN UND VORRICHTUNG ZUR SCHNELLEN BEREITSTELLUNG VON INFORMATIONEN
METHOD AND DEVICE FOR RAPID PROVISION OF INFORMATION

(30) Priorité: 04.04.2012 FR 1253085; 27.08.2012 FR 1258009; 27.08.2012 FR 1258010; 27.08.2012 FR 1258011
(43) Date de publication de la demande: 11.02.2015
(73) Titulaire: Qwant, 75007 Paris (FR)
(72) Inventeur: LEANDRI, Eric, F-75008 Paris (FR)
(74) Mandataire: Cornuejols, Georges
(86) Numéro de dépôt international: PCT/FR2013/050536
(87) Numéro de publication internationale: WO 2013/150201

(56) Documents cités:
- FINKELSTEIN L ET AL: "Placing Search in Context: The Concept Revisited", PROCEEDINGS OF THE TENTH INTERNATIONAL CONFERENCE ON WORLD WIDE WEB, 1 mai 2001 (2001-05-01), - 5 mai 2001 (2001-05-05), pages 406-414, XP055022193, Hong-Kong DOI: 10.1145/371920.372094 ISBN: 978-1-58-113348-6
- QAZVINIAN V ET AL: "Rumor has it: Identifying Misinformation in Microblogs", PROCEEDINGS OF THE 2011 CONFERENCE ON EMPIRICAL METHODS IN NATURAL LANGUAGE PROCESSING, EDINBURGH, SCOTLAND, UK, JULY 27-31, 2011, ASSOCIATION FOR COMPUTATIONAL LINGUISTICS, [Online] 27 juillet 2011 (2011-07-27), pages 1589-1599, XP002687040,

## Description

### DOMAINE TECHNIQUE

La présente invention concerne un procédé et un dispositif de fourniture rapide d'information. Elle s'applique, en particulier, aux moteurs de recherche sur des réseaux informatiques tels qu'Internet.

### ETAT DE LA TECHNIQUE ANTERIEURE

L'accessibilité et l'intelligibilité de l'information sont devenues des problèmes techniques majeurs depuis que cette information est disponible sur les réseaux informatiques tels qu'Internet.

Une recherche par mots-clés sur les moteurs de recherche les plus connus, par exemple celui décrit dans le document WO 2007/046830, donne une série de réponses, chaque réponse prenant la forme d'un titre associé à un lien hypertexte, un extrait de la page accessible avec ce lien qui comporte quelques uns des mots-clés sélectionnés et, éventuellement, une date et une adresse URL (acronyme de Uniform Resource Locator, littéralement « Localisateur Uniforme de Ressource »). Cependant, l'ordre de cette série de réponse dépend de choix effectués par les gestionnaires du moteur de recherche, par exemple dictés par des relations d'affaires ou des effets de concurrence avec des sites communautaires. Ainsi, les opinions sont mises en avant, ainsi que les copies multiples d'informations au détriment des informations utiles, objectives ou des informations initiales, avant recopie.

Le document "Rumor has it: Identifying Misinformation in Microblogs" [Qazvinian ET AL], Proceedings of the 2011 Conférence on Empirical Methods in Natural Language Processing, Edimburg, Scotland, UK, 27-31 juillet 2011, pages 1589-1599, décrit un système de détection de rumeurs sur Twitter permettant d'annoter des tweet considérés comme propageant une rumeur.

Le document "Placing Search in Context: The Concept Revisited" [Finkelstein ET AL], Proceedings of the 10th International Conférence on World Wide Web, Hong-Kong, 1-5 mai 2001, pages 406-414, décrit un procédé de recherche contextuelle permettant de présenter des résultats classés par pertinence selon leur contexte.

De plus, pour découvrir l'information disponible et lui attribuer des mots-clés, un robot parcourt, tour à tour, les sites de la toile (en anglais « web ») selon un cycle de plusieurs semaines.

L'information ainsi accessible n'est ainsi, généralement, ni suffisamment récente, ni suffisamment pertinente.

### EXPOSE DE L'INVENTION

La présente invention vise à remédier à ces inconvénients.

A cet effet, la présente invention vise, selon un premier aspect, un procédé de fourniture rapide d'information pertinente, qui comporte :
- une étape de saisie d'une pluralité de mots-clés par un utilisateur,
- une étape de détermination d'un contexte de recherche en fonction de la combinaison de mots-clés saisie,
- une étape de recherche de pages accessibles sur un réseau et comportant au moins un mot associé à un dit mot-clé,
- une étape de détermination d'un contexte de résultat en fonction du contenu de la page,
- une étape de détermination de la copie d'une information depuis une source d'informations accessible sur un réseau vers une autre source d'informations accessible sur ledit réseau,
- une étape d'affectation, à la source dont est copiée ladite information, d'un poids supérieur à la source où est placée une copie de ladite information,
- une étape de hiérarchisation des résultats de la recherche en fonction
   de la correspondance du contexte de la recherche et du contexte de chaque résultat de la recherche et
   du poids de la source ; et
- une étape d'affichage de résultats hiérarchisés.

Grâce à ces dispositions :
- l'utilisateur n'a pas à spécifier la signification particulière d'un mot lorsque ce mot possède plusieurs significations ;
- une source, par exemple un site ou un auteur de messages sur des réseaux sociaux se voit automatiquement appliquer un poids plus fort qu'un site ou un autre auteur qui recopie un contenu. On observe que le poids associé au site s'applique, au moins partiellement à toutes les pages du site. De même, le poids associé à un auteur s'applique, au moins partiellement, à tous les messages émis par cet auteur.

Du fait du lien entre le poids et la hiérarchie d'affichage, les sources originales de contenus sont favorisées.

Dans des modes de réalisation, l'étape de détermination de la copie d'une information comporte :
- une étape de mémorisation de l'information, d'un horodatage associé à ladite information et de la source de ladite information auprès de laquelle l'accès à ladite information a été obtenu et
- une étape de comparaison d'informations mémorisées pour détecter des similitudes entre des informations et, en cas de détection de similitudes entre deux informations mémorisées,
- une étape d'affectation d'un poids plus élevé à la source associée à l'horodatage le plus antérieur.

Dans des modes de réalisation, au cours de l'étape de comparaison, on détecte des similitudes en fonction d'un nombre de caractères successifs semblables entre les dites informations.

Dans des modes de réalisation, au cours de l'étape de comparaison, on détecte des similitudes en fonction d'un taux de mots semblables entre les dites informations.

Dans des modes de réalisation, au cours de l'étape de comparaison, on détecte des similitudes en fonction du nombre de mots semblables entre les dites informations et de la distance entre les dits mots semblables.

Grâce à chacune de ces dispositions, on détecte rapidement les copies d'informations.

Dans des modes de réalisation, au cours de l'étape d'affectation à la source dont est copiée l'information, le poids affecté à la source est une fonction croissante et non constante du nombre de copies de l'information déterminé au cours de l'étape de détermination de copie.

Ainsi, les auteurs de contenus qui disposent de nombreux suiveurs (« followers ») fournissent un poids plus élevé à leurs messages que les auteurs n'ayant pas ou peu de suiveurs.

Grâce à ces dispositions, une source, par exemple un site ou un auteur de messages sur des réseaux sociaux se voit automatiquement appliquer un poids plus fort qu'un site ou un autre auteur qui recopie un contenu. On observe que le poids associé au site s'applique, au moins partiellement à toutes les pages du site. De même, le poids associé à un auteur s'applique, au moins partiellement, à tous les messages émis par cet auteur.

Du fait du lien entre le poids et la hiérarchie d'affichage, les sources originales de contenus sont ainsi favorisées.

Dans des modes de réalisation, le procédé objet de l'invention comporte :
- une étape de création de groupes de sources d'information accessibles sur un réseau,
- une étape de saisie d'au moins un mot-clé principal par un utilisateur,
- une étape de recherche de pages dans lesdites sources d'information et comportant au moins un mot associé à un dit mot-clé principal,
- une étape de groupement des résultats de la recherche en fonction des groupes de sources d'informations où les résultats sont obtenus,
- une étape de hiérarchisation des résultats de la recherche, dans chaque groupe de résultats correspondant aux différents groupes de sources d'information en fonction du poids de la source et
- une étape d'affichage séparé de chaque groupe de résultats.

Grâce à ces dispositions, l'utilisateur peut visualiser parallèlement des résultats qui proviennent de sites d'information en ligne, de sites de commerce en ligne, de sites de réseaux sociaux, et d'autres sites de la toile, par exemple.

Dans des modes de réalisation, chaque groupe de sources d'information correspond à un groupe de sites d'activités similaires.

Dans des modes de réalisation, l'étape de création de groupes de sources d'information comporte une étape de mémorisation de groupes de sites dans un index sémantique corrélé, l'étape de groupement de résultats mettant en oeuvre les dits groupes conservés en index.

Dans des modes de réalisation, la création de groupes de sites est fonction d'informations présentes sur lesdits sites, l'étape de groupement de résultats mettant en oeuvre les dits groupes de sites.

Par exemple, la présence d'un grand nombre de prix sur un site permet de le grouper avec des sites de commerce en ligne.

Dans des modes de réalisation, au cours de l'étape de sélection d'une information complémentaire, l'utilisateur sélectionne ladite information complémentaire en regard d'un groupe de résultats et, au cours de la deuxième étape de hiérarchisation des résultats de la recherche, on hiérarchise uniquement les résultats dudit groupe de résultats.

Grâce à ces dispositions, l'utilisateur sélectionne un type de source d'informations. De plus, le procédé est particulièrement rapide puisque la deuxième étape de hiérarchisation ne concerne que les résultats d'un seul groupe de résultats.

Dans des modes de réalisation, au cours d'au moins une étape de hiérarchisation, on met en oeuvre une pondération des mots-clés principaux.

Dans des modes de réalisation, au cours d'au moins une étape de hiérarchisation, l'information complémentaire correspond à au moins un mot-clé de poids plus faible que le poids de chaque mot-clé principal.

Dans des modes de réalisation, au cours de l'étape de sélection d'une information complémentaire, l'utilisateur saisit au moins un mot-clé secondaire, chaque mot-clé secondaire ayant, au cours de la deuxième étape de hiérarchisation, un poids plus faible que chaque mot principal.

Dans des modes de réalisation, le procédé objet de la présente invention comporte une étape de catégorisation en fonction du contenu des pages de résultat de l'étape de recherche et, au cours de l'étape de sélection d'une information complémentaire, l'utilisateur sélectionne une catégorie, une deuxième étape de hiérarchisation donnant un niveau hiérarchique plus élevé aux pages correspondant à la catégorie sélectionnée.

Dans des modes de réalisation, le procédé objet de la présente invention comporte une étape de catégorisation en fonction du serveur hébergeant chaque page de résultat de l'étape de recherche et, au cours de l'étape de sélection d'une information complémentaire, l'utilisateur sélectionne une catégorie de serveur, une deuxième étape de hiérarchisation donnant un niveau hiérarchique plus élevé aux pages correspondant à la catégorie sélectionnée.

On observe que chaque catégorie de serveur peut être identifiée par un pays où se trouve le serveur.

Dans des modes de réalisation, au cours de l'étape de sélection d'une information complémentaire, l'utilisateur sélectionne un filtre et, au cours de la deuxième étape de hiérarchisation, les pages ne correspondant pas au filtre possèdent un poids plus faible que les pages correspondant au filtre.

Dans des modes de réalisation, au cours de l'étape de sélection d'une information complémentaire, l'utilisateur sélectionne un résultat de la recherche, le procédé comportant une étape de détermination de mots-clés secondaire en fonction du résultat sélectionnée et, au cours de la deuxième étape de hiérarchisation, chaque mot-clé secondaire possède un poids inférieur au poids de chaque mot-clé principal.

Dans des modes de réalisation, le procédé objet de l'invention comporte :
- une étape de groupement des résultats de la recherche en fonction de groupes de sources d'informations où est effectuée la recherche,
- une étape de hiérarchisation des résultats de la recherche, dans chaque groupe de résultats correspondant aux différents groupes de sites et
- une étape d'affichage séparé de chaque groupe résultats.

Grâce à ces dispositions, l'utilisateur peut visualiser parallèlement, des résultats qui proviennent de sites d'information en ligne, de sites de commerce en ligne, de sites de réseaux sociaux, et d'autres sites de la toile, par exemple.

Dans des modes de réalisation, chaque groupe de source d'information correspond à un groupe de sites d'activités similaires.

Dans des modes de réalisation, le procédé objet de la présente invention comporte une étape de groupement de sites en fonction d'informations présentes sur lesdits sites, l'étape de groupement de résultats mettant en oeuvre les dits groupes de sites.

Par exemple la présence d'un grand nombre de prix sur un site permet de le grouper avec des sites de commerce en ligne.

La présente invention vise, selon un deuxième aspect, un dispositif de fourniture rapide d'information pertinente comportant un moyen de saisie d'une pluralité de mots-clés par un utilisateur, caractérisé en ce qu'il comporte, en outre :
- un moyen de détermination d'un contexte de recherche en fonction de la combinaison de mots-clés saisie,
- un moyen de recherche de pages accessibles sur un réseau et comportant au moins un mot associé à un dit mot-clé,
- un moyen de détermination d'un contexte de résultat en fonction du contenu de la page,
- un moyen de détermination de la copie d'une information depuis une source d'informations accessible sur un réseau vers une autre source d'informations accessible sur ledit réseau,
- un moyen d'affectation, à la source dont est copiée ladite information, d'un poids supérieur à la source où est placée une copie de ladite information,
- un moyen de hiérarchisation des résultats de la recherche en fonction
   de la correspondance du contexte de la recherche et du contexte de chaque résultat de la recherche et
   du poids de la source ; et
- un moyen d'affichage de résultats hiérarchisés.

Les avantages, buts et caractéristiques particulières de ce dispositif étant similaires à ceux du procédé objet du premier aspect de la présente l'invention, ils ne sont pas rappelés ici.

La présente invention vise, selon un troisième aspect, un procédé de fourniture rapide d'information pertinente, qui comporte :
- une étape de saisie d'au moins un mot-clé principal par un utilisateur,
- une étape de recherche de pages accessibles sur un réseau et comportant au moins un mot associé à un dit mot-clé principal,
- une première étape de hiérarchisation des résultats de la recherche,
- une étape d'affichage de résultats de ladite étape de recherche possédant un niveau hiérarchique élevé lors de la première étape de hiérarchisation,
- une étape de sélection d'une information complémentaire par ledit utilisateur,
- une deuxième étape de hiérarchisation des résultats de la recherche en fonction de ladite information complémentaire et
- une étape d'affichage de résultats de ladite étape de recherche possédant un niveau hiérarchique élevé lors de la deuxième étape de hiérarchisation.

Grâce à ces dispositions, l'utilisateur peut affiner la recherche progressivement pour obtenir rapidement l'affichage de l'information pertinente qu'il recherche.

Selon des caractéristiques particulières, au cours d'au moins une étape de hiérarchisation, on met en oeuvre une pondération des mots-clés principaux.

Selon des caractéristiques particulières, au cours d'au moins une étape de hiérarchisation, l'information complémentaire correspond à au moins un mot-clé de poids plus faible que le poids de chaque mot-clé principal.

Selon des caractéristiques particulières, au cours de l'étape de sélection d'une information complémentaire, l'utilisateur saisit au moins un mot-clé secondaire, chaque mot-clé secondaire ayant, au cours de la deuxième étape de hiérarchisation, un poids plus faible que chaque mot principal.

Selon des caractéristiques particulières, le procédé objet de la présente invention comporte une étape de catégorisation en fonction du contenu des pages de résultat de l'étape de recherche et, au cours de l'étape de sélection d'une information complémentaire, l'utilisateur sélectionne une catégorie, une deuxième étape de hiérarchisation donnant un niveau hiérarchique plus élevé aux pages correspondant à la catégorie sélectionnée.

Selon des caractéristiques particulières, le procédé objet de la présente invention comporte une étape de catégorisation en fonction du serveur hébergeant chaque page de résultat de l'étape de recherche et, au cours de l'étape de sélection d'une information complémentaire, l'utilisateur sélectionne une catégorie de serveur, une deuxième étape de hiérarchisation donnant un niveau hiérarchique plus élevé aux pages correspondant à la catégorie sélectionnée.

On observe que chaque catégorie de serveur peut être identifiée par un pays où se trouve le serveur.

Selon des caractéristiques particulières, au cours de l'étape de sélection d'une information complémentaire, l'utilisateur sélectionne un filtre et, au cours de la deuxième étape de hiérarchisation, les pages ne correspondant pas au filtre possèdent un poids plus faible que les pages correspondant au filtre.

Selon des caractéristiques particulières, au cours de l'étape de sélection d'une information complémentaire, l'utilisateur sélectionne un résultat de la recherche, le procédé comportant une étape de détermination de mots-clés secondaire en fonction du résultat sélectionnée et, au cours de la deuxième étape de hiérarchisation, chaque mot-clé secondaire possède un poids inférieur au poids de chaque mot-clé principal.

La présente invention vise, selon un quatrième aspect, un dispositif de fourniture rapide d'information pertinente, qui comporte :
- un moyen de saisie d'au moins un mot-clé principal par un utilisateur,
- un moyen de recherche de pages accessibles sur un réseau et comportant au moins un mot associé à un dit mot-clé principal,
- un premier moyen de hiérarchisation des résultats de la recherche,
- un moyen d'affichage de résultats de la recherche possédant un niveau hiérarchique élevé attribué par le premier moyen de hiérarchisation,
- un moyen de sélection d'une information complémentaire par ledit utilisateur,
- un deuxième moyen de hiérarchisation des résultats de la recherche en fonction de ladite information complémentaire et
- un moyen d'affichage de résultats de la recherche possédant un niveau hiérarchique élevé attribué par le deuxième moyen de hiérarchisation.

Les avantages, buts et caractéristiques particulières de ce dispositif étant similaires à ceux du procédé objet du troisième aspect de l'invention, ils ne sont pas rappelés ici.

La présente invention vise, selon un cinquième aspect, un procédé de fourniture rapide d'information pertinente, qui comporte :
- une étape de création de groupes de sources d'information accessibles sur un réseau,
- une étape de saisie d'au moins un mot-clé principal par un utilisateur,
- une étape de recherche de pages dans lesdites sources d'information et comportant au moins un mot associé à un dit mot-clé principal,
- une étape de groupement des résultats de la recherche en fonction des groupes de sources d'informations où les résultats sont obtenus,
- une étape de hiérarchisation des résultats de la recherche, dans chaque groupe de résultats correspondant aux différents groupes de sources d'information et
- une étape d'affichage séparé de chaque groupe de résultats.

Grâce à ces dispositions, l'utilisateur peut visualiser parallèlement, des résultats qui proviennent de sites d'information en ligne, de sites de commerce en ligne, de sites de réseaux sociaux, et d'autres sites de la toile, par exemple.

Dans des modes de réalisation, chaque groupe de sources d'information correspond à un groupe de sites d'activités similaires.

Dans des modes de réalisation, l'étape de création de groupes de sources d'information comporte une étape de mémorisation de groupes de sites dans une base de données, l'étape de groupement de résultats mettant en oeuvre les dits groupes conservés en base de données.

Dans des modes de réalisation, la création de groupes de sites est fonction d'informations présentes sur lesdits sites, l'étape de groupement de résultats mettant en oeuvre les dits groupes de sites.

Par exemple la présence d'un grand nombre de prix sur un site permet de le grouper avec des sites de commerce en ligne.

La présente invention vise, selon un sixième aspect, un dispositif de fourniture rapide d'information pertinente, qui comporte :
- un moyen de création de groupes de sources d'information accessibles sur un réseau,
- un moyen de saisie d'au moins un mot-clé principal par un utilisateur,
- un moyen de recherche de pages dans lesdites sources d'information et comportant au moins un mot associé à un dit mot-clé principal,
- un moyen de groupement des résultats de la recherche en fonction des groupes de sources d'informations où les résultats sont obtenus,
- un moyen de hiérarchisation des résultats de la recherche, dans chaque groupe de résultats correspondant aux différents groupes de sources d'information et
- un moyen d'affichage séparé de chaque groupe de résultats.

Les avantages, buts et caractéristiques particulières de ce dispositif étant similaires à ceux du procédé objet du cinquième aspect de l'invention, ils ne sont pas rappelés ici.

La présente invention vise, selon un septième aspect, un procédé de fourniture rapide d'information pertinente, qui comporte :
- une étape de détermination de la copie d'une information depuis une source d'informations accessible sur un réseau vers une autre source d'informations accessible sur ledit réseau,
- une étape d'affectation, à la source dont est copiée ladite information, d'un poids supérieur à la source où est placée une copie de ladite information,
- une étape de recherche de pages accessibles sur un réseau et comportant au moins un mot associé à un mot-clé principal,
- une étape de hiérarchisation des résultats de la recherche, mettant en oeuvre ledit poids de la source et
- une étape d'affichage de résultats hiérarchisés.

Grâce à ces dispositions, une source, par exemple un site ou un auteur de messages sur des réseaux sociaux se voit automatiquement appliquer un poids plus fort qu'un site ou un autre auteur qui recopie un contenu. On observe que le poids associé au site s'applique, au moins partiellement à toutes les pages du site. De même, le poids associé à un auteur s'applique, au moins partiellement, à tous les messages émis par cet auteur.

Du fait du lien entre le poids et la hiérarchie d'affichage, les sources originales de contenus sont ainsi favorisées.

Dans des modes de réalisation, l'étape de détermination de la copie d'une information comporte :
- une étape de mémorisation de l'information, d'un horodatage associé à ladite information et de la source de ladite information auprès de laquelle l'accès à ladite information a été obtenu et
- une étape de comparaison d'informations mémorisées pour détecter des similitudes entre des informations et, en cas de détection de similitudes entre deux informations mémorisées, une étape d'affectation d'un poids plus élevée à la source associée à l'horodatage le plus antérieur.

Dans des modes de réalisation, au cours de l'étape de comparaison, on détecte des similitudes en fonction d'un nombre de caractères successifs semblables entre les dites informations.

Dans des modes de réalisation, au cours de l'étape de comparaison, on détecte des similitudes en fonction d'un taux de mots semblables entre les dites informations.

Dans des modes de réalisation, au cours de l'étape de comparaison, on détecte des similitudes en fonction du nombre de mots semblables entre les dites informations et de la distance entre les dits mots semblables.

Grâce à chacune de ces dispositions, on détecte rapidement les copies d'informations.

Dans des modes de réalisation, au cours de l'étape d'affectation à la source dont est copiée l'information, le poids affecté à la source est une fonction croissante et non constante du nombre de copies de l'information déterminé au cours de l'étape de détermination de copie.

Ainsi, les auteurs de contenus qui disposent de nombreux suiveurs (« followers ») fournissent un poids plus élevé à leurs messages que les auteurs n'ayant pas ou peu de suiveurs.

La présente invention vise, selon un huitième aspect, un dispositif de fourniture rapide d'information pertinente, qui comporte :
- un moyen de détermination de la copie d'une information depuis une source d'informations accessible sur un réseau vers une autre source d'informations accessible sur ledit réseau,
- un moyen d'affectation, à la source dont est copiée ladite information, d'un poids supérieur à la source où est placée une copie de ladite information et
- un moyen de recherche de pages accessibles sur un réseau et comportant au moins un mot associé à un mot-clé principal,
- un moyen de hiérarchisation des résultats de la recherche, mettant en oeuvre ledit poids de la source et
- un moyen d'affichage de résultats hiérarchisés.

Les avantages, buts et caractéristiques particulières de ce dispositif étant similaires à ceux du procédé objet du septième aspect de l'invention, ils ne sont pas rappelés ici.

La présente invention vise, selon un neuvième aspect, un procédé de fourniture rapide d'information pertinente, qui comporte :
- une étape de saisie d'une pluralité de mots-clés par un utilisateur,
- une étape de détermination d'un contexte de recherche en fonction de la combinaison de mots-clés saisie,
- une étape de recherche de pages accessibles sur un réseau et comportant au moins un mot associé à un dit mot-clé,
- une étape de détermination d'un contexte de résultat en fonction du contenu de la page,
- une étape de hiérarchisation des résultats de la recherche en fonction de la correspondance du contexte de la recherche et du contexte de chaque résultat de la recherche et
- une étape d'affichage de résultats hiérarchisés.

Grâce à ces dispositions, l'utilisateur n'a pas à spécifier la signification particulière d'un mot lorsque ce mot possède plusieurs significations.

La présente invention vise, selon un dixième aspect, un dispositif de fourniture rapide d'information pertinente, qui comporte :
- un moyen de saisie d'une pluralité de mots-clés par un utilisateur,
- un moyen de détermination d'un contexte de recherche en fonction de la combinaison de mots-clés saisie,
- un moyen de recherche de pages accessibles sur un réseau et comportant au moins un mot associé à un dit mot-clé,
- un moyen de détermination d'un contexte de résultat en fonction du contenu de la page,
- un moyen de hiérarchisation des résultats de la recherche en fonction de la correspondance du contexte de la recherche et du contexte de chaque résultat de la recherche et
- un moyen d'affichage de résultats hiérarchisés.

Les avantages, buts et caractéristiques particulières de ce dispositif étant similaires à ceux du procédé objet du neuvième aspect de l'invention, ils ne sont pas rappelés ici.

Les caractéristiques principales ou particulières des différents aspects de la présente invention sont des caractéristiques particulières des autres aspects de la présente invention. Ces caractéristiques, principales ou particulières des différents aspects de la présente invention sont préférentiellement combinées pour obtenir l'ensemble des avantages énoncés pour chacun de ces aspects, dans un moteur de recherche unique.

### BREVE DESCRIPTION DES FIGURES

D'autres avantages, buts et caractéristiques particulières de la présente invention ressortiront à la lecture de la description qui va suivre faite, dans un but explicatif et nullement limitatif, en regard des dessins annexés, dans lesquels :
- la figure 1 représente, schématiquement, une interface mise en oeuvre par un mode de réalisation particulier du procédé objet de la présente invention,
- la figure 2 représente, schématiquement, un réseau de serveurs et
- la figure 3 représente, sous la forme d'un logigramme, des étapes mises en oeuvre dans un mode de réalisation du procédé de recherche objet de la présente invention.
- la figure 4 représente, sous forme de logigramme, des étapes mises en oeuvre au cours de l'une des étapes illustrée en figure 3.

### EXPOSE DE MODES DE REALISATION DE L'INVENTION

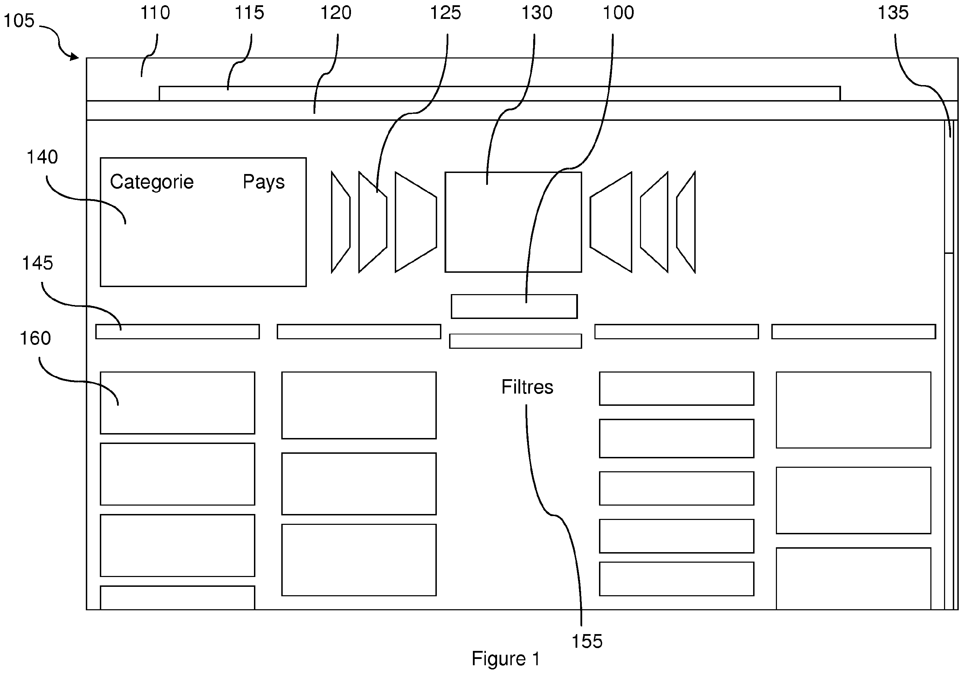

On observe, en figure 1, une interface utilisateur 105, telle qu'elle apparaît sur l'écran d'un terminal, par exemple un ordinateur personnel, un smartphone, une tablette. Dans cette interface se trouvent, en haut, une barre 110 liée au navigateur avec lequel on accède, sur la toile (« web ») à l'interface 105, une barre d'adresse 115 qui représente l'adresse électronique (« URL ») du serveur fournissant l'interface 105 et une barre 120 de menus déroulants et/ou d'icônes.

Dans la fenêtre principale, on observe des prévisualisations dynamiques obliques 125 des pages accessibles avec les liens des réponses à la recherche. Ces pages pré-visualisées sont animées. Par exemple, la prévisualisation permet de voir si une vidéo ou une animation se trouve sur chaque page pré-visualisée. Le terme « oblique » signifie, ici, que les pages sont représentées par des trapèzes d'autant plus étroits, latéralement, que l'on s'éloigne du centre de l'interface 105.

Au centre des prévisualisations 125 se trouvent une prévisualisation dynamique 130 d'une page sélectionnée. Cette page est sélectionnée en passant le curseur d'un dispositif de pointage, par exemple une souris, sur l'une des prévisualisations dynamiques. L'utilisateur peut ainsi faire défiler, latéralement, les pages accessibles avec les liens des réponses à la recherche. En cliquant sur l'une de ces pages, l'utilisateur provoque l'ouverture d'un nouvel onglet ou d'une nouvelle fenêtre et accède à l'affichage, en grand format, de la page sélectionnée. Alternativement, en cliquant sur l'une des pages pré-visualisées, l'onglet d'affichage des résultats de la recherche est remplacé par un onglet d'affichage de la page sélectionnée.

En dessous de la prévisualisation 130 se trouve une zone 100 de saisie d'au moins un mot-clé principal. C'est dans cette zone 100 que l'utilisateur saisit un ou plusieurs mots-clés. Le bouton rectangulaire (non référencé) situé en dessous de la zone 100 permet, de même que la touche « entrée » du clavier, de lancer la recherche.

A gauche des prévisualisations 125, se trouve une fenêtre 140 d'affichage de catégories dynamiques et de pays dynamiques. Les catégories dynamiques sont constituées en déterminant, dans les réponses correspondant aux mots-clés principaux, les mots qui ne se trouve ni rarement, ni très couramment. Par exemple, les catégories sont constituées des mots se trouvant dans moins de 70 % des réponses, à l'exclusion des mots d'une liste de mot faiblement signifiant, comme « puisque », « parfois », ...et dans plus de 20 % des pages. Les pays sont sélectionnés, par exemple, en prenant les neuf pays où se trouvent le plus les serveurs qui hébergent les pages de réponses.

On observe que les catégories et les pays correspondent à deux catégorisations des sources de contenus recherchés :
- dans la première, on réalise une catégorisation en fonction du contenu des pages de résultat de l'étape de recherche, le niveau hiérarchique étant plus élevé pour les pages correspondant à la catégorie sélectionnée,
- dans la deuxième, on réalise une catégorisation en fonction du serveur hébergeant chaque page de résultat de l'étape de recherche, le niveau hiérarchique étant plus élevé pour les pages correspondant à la catégorie sélectionnée.

On observe que chaque catégorie de serveur peut être identifiée par un pays où se trouve le serveur. En variante, le pays est déterminé en fonction du nom de domaine du site, de son adresse sur le réseau et/ou des routeurs de terminaison permettant d'accéder au contenu hébergé par ce serveur.

Bien entendu, lorsque la spécification de la recherche est modifiée, par remplacement des mots-clés dans la zone 100 ou par complément de définition de recherche, comme exposé ci-dessous, les listes de catégories et de pays sont automatiquement modifiées. La recherche effectuée sur les mots-clés saisis se fait non seulement sur ces mots-clés, mais aussi sur les mots clés proches, comme, par exemple le féminin ou le pluriel d'un déterminant (la saisie du mot-clé « candidat » provoque aussi la recherche sur les mots-clés « candidate », « candidats », « candidates ») et les mots associés (« candidature »). S'y ajoutent la recherche avec les synonymes (« postulant »). A cet effet, on met en oeuvre un dictionnaire de mots liés ou synonymes et/ou un nuage de mots dans lequel la distance entre les mots est déterminée dynamiquement avec les réponses aux recherches effectuées par les utilisateurs.

De plus, la distance de chaque mot-clé, par rapport au début du texte présent sur une page est utilisateur comme indicateur de pertinence : plus le mot-clé est proche du début du texte, plus la réponse est considérée comme pertinente. La distance entre deux mots-clés est utilisée de la même manière : plus ils sont proches, dans le texte d'une page, plus cette page est considérée comme pertinente.

En cliquant sur une des catégories ou un nom de pays affichés dans la fenêtre, la recherche est modifiée et/ou les résultats de la recherche sont triés pour n'afficher que les résultats qui comportent les mots définis par la catégorie sélectionnée ou que les pages hébergées dans le pays sélectionné.

A droite de l'interface 105, un ascenseur 135 représente la partie de l'interface 105 qui est affichée sur l'écran, de manière connue. En sélectionnant et déplaçant cet ascenseur, l'utilisateur fait défiler verticalement l'interface 105, de haut en bas.

Quatre zones 145 représentent quatre groupes de recherches et surplombent quatre groupes 160 de réponses. Par exemple, la zone 145 la plus à gauche représente la toile (« web ») et indique que les réponses du groupe 160 se trouvant sous cette zone 145 sont des pages de la toile. La zone 145 à gauche de la zone de saisie 100 représente la chronologie (« chrono ») et indique que les réponses du groupe 160 se trouvant sous cette zone 145 sont les dernières informations publiées sur des sites de journaux. La zone 145 à droite de la zone de saisie 100 représente les réseaux sociaux (« social ») et indique que les réponses du groupe 160 se trouvant sous cette zone 145 sont les derniers messages publiés sur des sites des réseaux sociaux. Préférentiellement, une indication de temps passé depuis la publication de la réponse est associée à la réponse. Enfin, la zone 145 la plus à droite représente le commerce (« shopping ») chronologie et indique que les réponses du groupe 160 se trouvant sous cette zone sont des résultats obtenus sur les sites de commerce.

Par défaut, les réponses qui ont été mises à jour le plus récemment sont représentées en haut des groupes 160, au moins, pour les groupes de résultats 160 correspondant aux réseaux sociaux et aux journaux en ligne. Les groupes de résultats 160 correspondant à la toile et aux sites de commerce en ligne peuvent être organisés en fonction de la pertinence des réponses, notamment en mettant en oeuvre une pondération des mots clés saisis explicitement (par saisie dans l'une des zones 100 ou 145) ou implicitement (par sélection de catégorie ou de pays ou par sélection d'un résultat, comme exposé ci-dessous).

En saisissant au moins un mot clé dans l'une des zones 145, l'utilisateur déclenche une recherche, parmi les résultats de la recherche, dans le groupe 160 correspondant à cette zone 145, des réponses comportant chaque nouveau mot-clé saisi. Ainsi, chaque mot-clé saisit dans la zone de saisie 100 possède un poids, dans la recherche, supérieur au mot saisi dans la zone 145. On note que les autres zones 145 et groupes 160 ne sont pas affectées par la saisie d'un mot-clé dans une zone 145.

Ainsi, dans des modes de réalisation, au cours de l'étape de sélection d'une information complémentaire, l'utilisateur sélectionne l'information complémentaire en regard d'un groupe de résultats et, au cours d'une deuxième étape de hiérarchisation des résultats de la recherche, on hiérarchise, préférentiellement uniquement, les résultats dudit groupe de résultats.

Une fenêtre 155 située sous la zone de saisie 100 représente des types de filtres que l'utilisateur peut faire appliquer aux résultats de la recherche pour améliorer la pertinence des résultats affichés. Par exemple, ces filtres sont « tous », « facebook » (marque déposée), « twitter » (marque déposée), « Youtube » (marque déposée), « Tri », « Plus récent », « Plus ancien », « Affichage », « Grille » et « Lignes ». Ces filtres réalisent des tris, à l'exception de « tous » qui sont la valeur par défaut, sans tri :
- la sélection du filtre de tri « facebook » provoque l'affichage, dans le groupe de résultats issus des réseaux sociaux, des seuls résultats provenant du site « facebook »,
- la sélection du filtre de tri « twitter » provoque l'affichage, dans le groupe de résultats issus des réseaux sociaux, des seuls résultats provenant du site « twitter »,
- la sélection du filtre de tri « youtube » provoque l'affichage, dans le groupe de résultats issus des réseaux sociaux, des seuls résultats provenant du site « youtube »,
- la sélection du filtre de tri « Tri » permet d'accéder à d'autres filtres de tri que ceux qui sont représentés dans la fenêtre 155 et à des paramètres de tri dont on peut modifier la valeur,
- la sélection du filtre de tri « Plus récent », valeur par défaut, provoque, l'affichage, dans les groupes de résultats de recherche 160, des pages qui ont été mises à jour le plus récemment,
- la sélection du filtre de tri « Plus ancien », provoque, l'affichage, dans les groupes de résultats de recherche 160, des pages qui ont été mises à jour le plus anciennement,
- la sélection du filtre de tri « Affichage » permet d'accéder à d'autres types d'affichage des résultats que ceux qui sont représentés dans l'interface 105 illustrée en figure 1 et à des paramètres d'affichage dont on peut modifier la valeur,
- la sélection du filtre de tri « Grille », valeur par défaut, permet l'affichage des résultats sous forme d'une grille, comme illustré en figure 1,
- la sélection du filtre de tri « Lignes » permet l'affichage ligne à ligne des résultats obtenus, comme dans un moteur de recherche classique. Ce type de tri est, par exemple, adapté à des smartphones disposant d'un écran relativement plus petit que celui des tablettes PC et des ordinateurs personnels.

Ainsi, l'utilisateur peut faire des choix, dans les fenêtres 140 ou 155 ou dans les zones 145 pour compléter la recherche initialement effectuée par saisie de mots-clés dans la zone de saisie 100.

Lorsque l'on affine ainsi la recherche, ou lorsque l'on clique sur l'un des résultats de la recherche, les mots signifiants présents dans le titre de la page sélectionnée forment automatiquement des mots-clés complémentaires, de plus faible poids que les mots-clés saisis sans la zone de saisie 100 et dans la zone 145, et l'affichage des résultats de la recherche est modifié pour tenir compte de ces poids.

Enfin, on met en oeuvre une popularité des réponses en fonction des sélections effectuées par les précédents utilisateurs ayant effectué la même recherche ou une recherche similaire et les recommandations faites, sur les réseaux sociaux, par les utilisateurs. Ces recommandations influencent ainsi chacune des colonnes puisqu'elles peuvent concerner des sites de la toile, des sites de journaux en ligne ou des sites de commerce en ligne. De même, les copies de twit (messages envoyés sur le site « twitter ») donnent du poids au twit original. Ce twit copié remonte ainsi dans le groupe 160 des résultats obtenus sur les sites de réseaux sociaux. De même, les auteurs de contenus qui disposent de nombreux suiveurs (« followers ») fournissent un poids plus élevé à leurs messages que les auteurs n'ayant pas de suiveurs.

Pour la différentiation des auteurs originaux, ou influenceurs (« leaders ») de leurs suiveurs, on effectue un traitement des copies d'information pour constituer une arborescence. Ce traitement en temps réel réalise un historique et trouve les copies. Il constitue ainsi l'arborescence. Le suivi des apparitions d'information dans le monde virtuel permet aussi de différencier les influenceurs (« leaders ») et les suiveurs « followers »). Les messages émis par les premiers ont un poids plus élevé que ceux émis par les seconds.

Enfin, on peut connaître la pertinence d'un auteur en utilisant son profil sur les réseaux sociaux professionnels, tels que Linkedln ou Viadeo (marques déposées). On indexe ainsi les mots-clés par concept (par exemple, « personne », « société », « géographie » ou « pays »). Ainsi, une recherche sur « Victor Hugo » donnera des résultats sur l'auteur du même nom et exclura les noms de rue « Victor Hugo ». Pour réaliser cette catégorisation par concept, on met en oeuvre une analyse contextuelle. Ainsi, la présence conjointe de « Victor Hugo » et « Misérables » dans une page affecte à « Victor Hugo » le concept « personne » alors que la présence conjointe de « Victor Hugo » et « Boucherie » dans une page affecte à « Victor Hugo » le concept « géographie ».

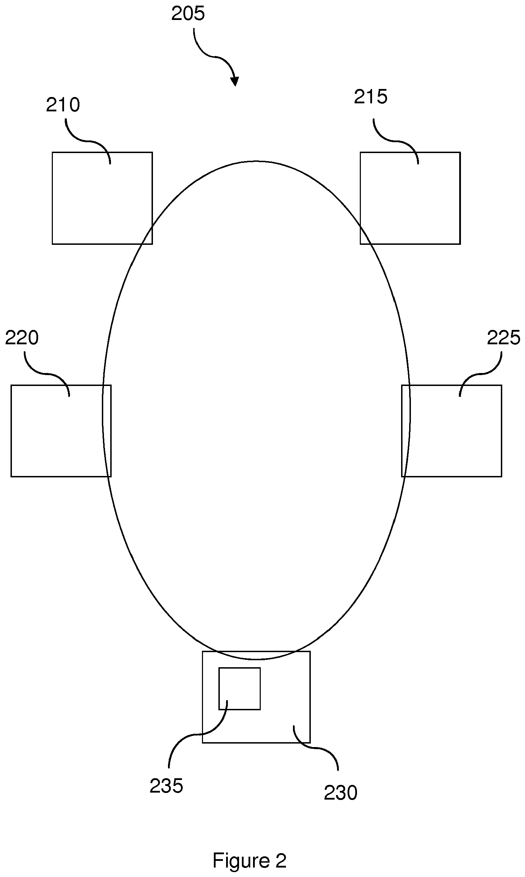

On observe, en figure 2, un réseau 205, par exemple internet, qui lie entre eux, par exemple avec le protocole Internet (« Internet Protocol » ou « IP »), un terminal 230 de consultation muni d'un navigateur 235, un groupe de serveurs 210 de la toile, un groupe de serveurs 215 de sites de journaux en ligne, un groupe de serveurs 220 de sites de réseaux sociaux et un groupe de serveurs 225 de sites de commerce en ligne.

Lorsqu'une recherche est lancée par l'utilisateur, cette recherche est effectuée, parallèlement, sur chacun des groupes 210 à 225 et les résultats correspondants sont affichés dans les groupes de résultats 160 illustrés en figure 1.

La suite de la description donne d'autres avantages et caractéristiques techniques de différents modes de réalisation du procédé objet de l'invention.

Pour parvenir aux résultats exposés ci-dessus, un moteur de recherche intelligent apprend de ses utilisateurs :
- chaque nouvelle requête s'ajoute à la précédente et augmente la pertinence des résultats,
- le procédé peut comporter d'utiliser les données des utilisateurs (centres d'intérêt déclarés sur tous les réseaux sociaux) afin d'affiner ses résultats et répondre à des questions telles que « Ou est-ce que je peux sortir ce soir ? »

Le procédé peut aussi comporter de scanner et d'indexer n'importe quelle source de données en temps réel :
- Web (sites web, actualités, photos, vidéos ...)
- Réseau sociaux
- Espaces de stockage en ligne (Dropbox, SugarSync, marques déposées), disques durs ...

Le procédé peut aussi comporter de mettre en place et à disposition des utilisateurs une plate-forme d'échange et de constitution de réseau. De même que les outils de recherche sont imparfaits, le « social networking » comporte ses limites : la plus importante vient du fait que la plupart des internautes ne partagent pas les mêmes centres d'intérêt actuels que leurs « amis » (ou les même domaines de recherche). Une autre limite importante est que, très souvent, ces « amis » sont des individus qu'ils connaissent à peine. Par conséquent, la plupart du temps, ces « amis » ne peuvent contribuer à rendre plus pertinents le résultat de des recherches du moment alors que de nombreux individus pourraient apporter des résultats très pertinents s'ils pouvaient être connectés entre eux.

Au contraire, une plate-forme mise en oeuvre avec le procédé objet de l'invention permet que, quels que soient les centres d'intérêt et les domaines de recherche actuels, (recherche d'un événement, recherche d'un produit, recherche d'informations sur une personne, un ami ou autre), on identifie et permet de se connecter à toute personne dans le monde ayant exprimé un intérêt sur le sujet considéré. Le procédé permet de connecter les résultats des recherches avec des personnes partageant les mêmes domaines d'intérêt en traitant l'information qu'ils ont commenté ces sujets sur les réseaux sociaux.

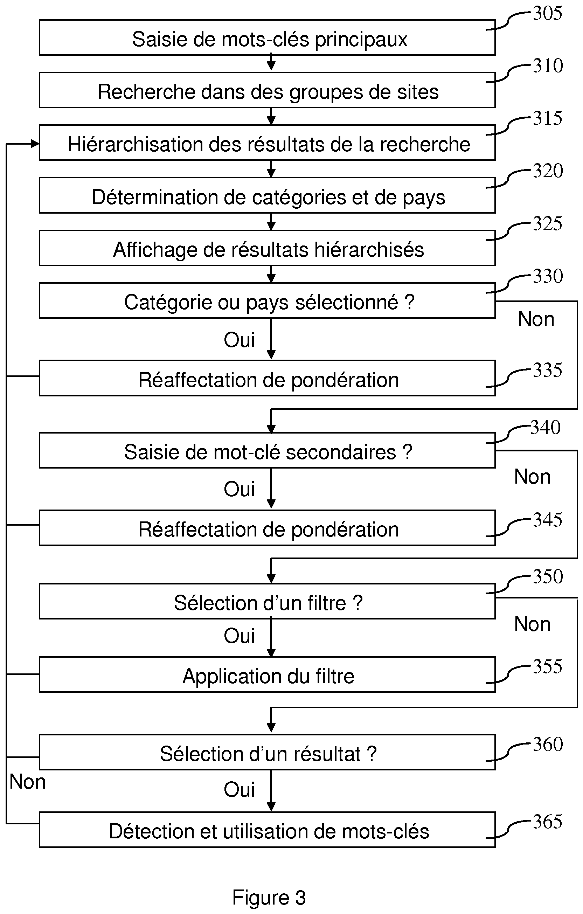

On observe, en figure 3, une étape 305 de saisie, par un utilisateur, d'au moins un mot-clé dit « principal » car son poids est le plus élevé dans les recherches. Puis l'utilisateur lance la recherche.

Au cours d'une étape 310, le moteur de recherche sous-jacent au site de recherche effectue la recherche des pages comportant au moins un mot clé principal.

A cet effet, le moteur de recherche analyse séparément les contenus dans différents groupes de sites, par exemple :
- la toile (« web »), où les réponses sont des pages de la toile,
- la chronologie (« chrono »), où les réponses sont les dernières informations publiées sur des sites de journaux,
- les réseaux sociaux (« social »), où les réponses sont des messages publiées sur des sites des réseaux sociaux et
- le commerce (« shopping »), où les réponses sont obtenues sur les sites de commerce.

Pour séparer ces recherches, on met en oeuvre des bases de données de sites dans chacune des catégories ou on fait une analyse de contexte (les prix sont des indicateurs de sites de commerce, par exemple).

La recherche effectuée sur les mots-clés saisis se fait non seulement sur ces mots-clés, mais aussi sur les mots clés proches, comme, par exemple le féminin ou le pluriel d'un déterminant (la saisie du mot-clé « candidat » provoque aussi la recherche sur les mots-clés « candidate », « candidats », « candidates ») et les mots associés (« candidature »). S'y ajoutent la recherche avec les synonymes (« postulant »). A cet effet, on met en oeuvre un dictionnaire de mots liés ou synonymes et/ou un nuage de mots dans lequel la distance entre les mots est déterminée dynamiquement avec les réponses aux recherches effectuées par les utilisateurs.

Au cours d'une étape 315, on hiérarchise les résultats de la recherche, pour chacun des groupes de résultats. Certains groupes sont hiérarchisés en fonction de la pertinence des réponses, basée sur la position et le poids des mots-clés explicitement saisis, de leurs mots associés (proches ou synonymes, par exemple) et des mots-clés implicites. La distance de chaque mot-clé, par rapport au début du texte présent sur une page est utilisateur comme indicateur de pertinence : plus le mot-clé est proche du début du texte, plus la réponse est considérée comme pertinente. La distance entre deux mots-clés est utilisée de la même manière : plus ils sont proches, dans le texte d'une page, plus cette page est considérée comme pertinente. D'autres groupes prennent en compte, dans la hiérarchisation, la durée écoulée depuis la mise en ligne du résultat, notamment pour les groupes « chrono » et « social ».

La hiérarchisation peut aussi utiliser une popularité des réponses en fonction des sélections effectuées par les précédents utilisateurs ayant effectué la même recherche ou une recherche similaire et les recommandations faites, sur les réseaux sociaux, par les utilisateurs. Ces recommandations influencent ainsi chacune des colonnes puisqu'elles peuvent concerner des sites de la toile, des sites de journaux en ligne ou des sites de commerce en ligne. De même, les copies de twit (messages envoyés sur le site « twitter ») donnent du poids au twit original. Ce twit copié remonte ainsi dans le groupe 160 des résultats obtenus sur les sites de réseaux sociaux. De même, les auteurs de contenus qui disposent de nombreux suiveurs (« followers ») fournissent un poids plus élevé à leurs messages que les auteurs n'ayant pas de suiveurs. Pour la différentiation des auteurs originaux, ou influenceurs (« leaders ») de leurs suiveurs, on effectue un traitement des copies d'information pour constituer une arborescence. Ce traitement en temps réel réalise un historique et trouve les copies. Il constitue ainsi l'arborescence. Le suivi des apparitions d'information dans le monde virtuel permet aussi de différencier les influenceurs (« leaders ») et les suiveurs « followers »). Les messages émis par les premiers ont un poids plus élevé que ceux émis par les seconds.

Enfin, on peut connaître la pertinence d'un auteur en utilisant son profil sur les réseaux sociaux professionnels, tels que Linkedln ou Viadeo (marques déposées).

La hiérarchisation des résultats prend aussi en compte les concepts (par exemple, « personne », « société », « géographie » ou « pays »). La combinaison de mots clés principaux, ou secondaires, indique le concept auquel se rattachent les résultats attendus. Une analyse des résultats permet, aussi, l'association d'un concept à un résultat. Les résultats dont le concept correspond au concept de la combinaison de mots clés obtiennent un rang plus élevé que les autres résultats.

Au cours d'une étape 320, le moteur de recherche détermine des catégories et des pays sur la base des résultats de la recherche. Ces catégories, dynamiques, sont constituées en déterminant, dans les réponses correspondant aux mots-clés principaux, les mots qui ne se trouve ni rarement, ni très couramment. Les pays sont sélectionnés, par exemple, en prenant les neuf pays où se trouvent le plus les serveurs qui hébergent les pages de réponses. Lorsque la spécification de la recherche est modifiée, par remplacement des mots-clés dans la zone 100 ou par complément de définition de recherche, comme exposé ci-dessous, les listes de catégories et de pays sont automatiquement modifiées.

Au cours d'une étape 325, on affiche les résultats de plus haut rang dans chacun des groupes de résultats.

Au cours d'une étape 330, on détermine si l'utilisateur a sélectionné une catégorie ou un pays. Si oui, au cours d'une étape 335, on donne aux résultats correspondant à ce critère, un poids supérieur aux autres résultats et on retourne à l'étape 315. En variante, en cliquant sur une des catégories ou un nom de pays affichés dans la fenêtre, la recherche est modifiée et/ou les résultats de la recherche sont triés pour n'afficher que les résultats qui comportent les mots définis par la catégorie sélectionnée ou que les pages hébergées dans le pays sélectionné. Si le résultat de l'étape 330 est négatif, on passe à une étape 340.

Au cours de l'étape 340, on détermine si l'utilisateur a saisi au moins un mot-clé secondaire, dans une zone 145, en tête d'un groupe de résultats. Si oui, au cours d'une étape 345, on donne un poids à chaque mot-clé secondaire et on retourne à l'étape 315 pour le seul groupe de résultat en regard de la zone 145 utilisée. Ainsi, en saisissant au moins un mot clé dans l'une des zones 145, l'utilisateur déclenche une recherche, parmi les résultats de la recherche, dans le groupe 160 correspondant à cette zone 145, des réponses comportant chaque nouveau mot-clé saisi. Ainsi, chaque mot-clé saisit dans la zone de saisie 100 possède un poids, dans la recherche, supérieur au mot saisi dans la zone 145. On note que les autres zones 145 et groupes 160 ne sont pas affectées par la saisie d'un mot-clé dans une zone 145. Si le résultat de l'étape 340 est négatif, on passe à une étape 350.

Au cours de l'étape 350, on détermine si l'utilisateur a sélectionné un filtre, dans la fenêtre 155. Si oui, au cours d'une étape 355, on applique le filtre sélectionné au cours de l'étape 315. Ainsi, l'utilisateur peut faire appliquer un filtre aux résultats de la recherche pour améliorer la pertinence des résultats affichés. Si le résultat de l'étape 350 est négatif, on passe à une étape 360.

Au cours de l'étape 360, on détermine si l'utilisateur a cliqué sur un résultat de recherche affiché. Si oui, au cours d'une étape 365, les mots signifiants présents dans le titre de la page sélectionnée forment automatiquement des mots-clés complémentaires, de plus faible poids que les mots-clés saisis sans la zone de saisie 100 et dans la zone 145, et on retourne à l'étape 315. Sinon, on retourne à l'étape 315.

Ainsi, en mettant en oeuvre l'un des aspects de l'invention, le procédé réalise une fourniture rapide d'information pertinente, en comportant :
- une étape de saisie d'au moins un mot-clé principal par un utilisateur,
- une étape de recherche de pages accessibles sur un réseau et comportant au moins un mot associé à un dit mot-clé principal,
- une première étape de hiérarchisation des résultats de la recherche,
- une étape d'affichage de résultats de ladite étape de recherche possédant un niveau hiérarchique élevé lors de la première étape de hiérarchisation,
- une étape de sélection d'une information complémentaire par ledit utilisateur,
- une deuxième étape de hiérarchisation des résultats de la recherche en fonction de ladite information complémentaire et
- une étape d'affichage de résultats de ladite étape de recherche possédant un niveau hiérarchique élevé lors de la deuxième étape de hiérarchisation.

L'utilisateur peut ainsi affiner la recherche progressivement pour obtenir rapidement l'affichage de l'information pertinente qu'il recherche.

Préférentiellement, ce procédé comporte aussi :
- une étape de saisie d'au moins un mot-clé principal par un utilisateur,
- une étape de recherche de pages accessibles sur un réseau et comportant au moins un mot associé à un dit mot-clé principal,
- une étape de groupement des résultats de la recherche en fonction de groupes de sources d'informations où est effectuée la recherche,
- une étape de hiérarchisation des résultats de la recherche, dans chaque groupe de résultats correspondant aux différents groupes de sites et
- une étape d'affichage séparé de chaque groupe résultats.

Ainsi, l'utilisateur peut visualiser parallèlement, des résultats qui proviennent de sites d'information en ligne, de sites de commerce en ligne, de sites de réseaux sociaux, et d'autres sites de la toile, par exemple.

Dans des modes de réalisation, chaque groupe de source d'information correspond à un groupe de sites d'activités similaires.

On note qu'une étape de groupement de sites peut être préliminairement effectuée dans une base de données, l'étape de groupement de résultats mettant en oeuvre les dits groupes conservés en base de données.

L'étape de groupement de sites peut aussi être effectuée en fonction d'informations présentes sur lesdits sites. Par exemple la présence d'un grand nombre de prix sur un site permet de le grouper avec des sites de commerce en ligne.

Préférentiellement, ce procédé comporte aussi :
- une étape de détermination de la copie d'une information depuis une source accessible sur un réseau vers une autre,
- une étape d'affectation, à la source dont est copiée ladite information, d'un poids supérieur à la source où est placée une copie de ladite information et
- une étape de recherche de pages accessibles sur un réseau et comportant au moins un mot associé à un dit mot-clé principal,
- une étape de hiérarchisation des résultats de la recherche, mettant en oeuvre ledit poids de la source et
- une étape d'affichage de résultats hiérarchisés.

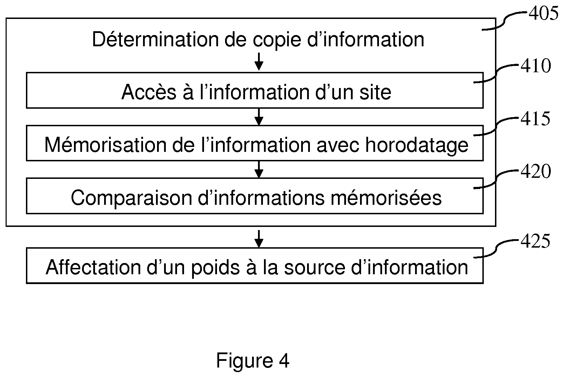

On observe, en figure 4, un procédé de fourniture rapide d'information pertinente, qui comporte, d'abord, une étape 405 de détermination de la copie d'une information depuis une source d'informations accessible sur un réseau vers une autre source d'informations accessible sur ledit réseau.

On note que la source considérée ici peut être un site (par exemple twitter) ou un auteur mettant de l'information disponible sur un site (auteur identifié par son pseudonyme).

Dans des modes de réalisation, l'étape 405 de détermination de la copie d'une information comporte :
- une étape 410 d'accès à toute l'information accessible sur au moins un site,
- une étape 415 de mémorisation de l'information, d'un horodatage associé à ladite information et de la source de ladite information auprès de laquelle l'accès à ladite information a été obtenu,
- une étape 420 de comparaison d'informations mémorisées pour détecter des similitudes entre des informations et, en cas de détection de similitudes entre deux informations mémorisées, au cours de l'étape 425 d'affectation détaillée plus bas, on affecte un poids plus élevée à la source associée à l'horodatage le plus antérieur.

Dans des modes de réalisation, au cours de l'étape 420 de comparaison, on détecte des similitudes en fonction d'un nombre de caractères successifs semblables entre les dites informations.

Dans des modes de réalisation, au cours de l'étape 420 de comparaison, on détecte des similitudes en fonction d'un taux de mots semblables entre les dites informations.

Dans des modes de réalisation, au cours de l'étape 420 de comparaison, on détecte des similitudes en fonction du nombre de mots semblables entre les dites informations et de la distance entre les dits mots semblables.

Grâce à chacune de ces dispositions, on détecte rapidement les copies d'informations.

Puis, on effectue une étape 425 d'affectation, à la source dont est copiée ladite information, d'un poids supérieur à la source où est placée une copie de ladite information et

Dans des modes de réalisation, au cours de l'étape 425 d'affectation d'un poids à la source dont est copiée l'information, le poids affecté à la source est une fonction croissante et non constante du nombre de copies de l'information déterminé au cours de l'étape de détermination de copie.

Ainsi, les auteurs de contenus qui disposent de nombreux suiveurs (« followers ») fournissent un poids plus élevé à leurs messages que les auteurs n'ayant pas ou peu de suiveurs.

Dans des modes de réalisation, au cours de l'étape 425 d'affectation de poids, on affecte à la source ayant fourni la copie de l'information, un poids inférieur aux sources n'ayant pas fourni de copie. On dissuade ainsi les copieurs de poursuivre les copies.

Dans des modes de réalisation, au cours de l'étape 425 d'affectation de poids, le poids affecté à une source dépend du type de copie détectée. S'il s'agit d'une copie sur le même site que l'information originale, le poids affecté est plus élevé que s'il s'agit d'une copie sur un autre site et, encore plus élevé que s'il s'agit d'une copie sur un site d'une autre catégorie, d'un autre groupe ou d'un autre type que le site sur lequel a été copiée l'information.

Grâce à ces dispositions, une source, par exemple un site ou un auteur de messages sur des réseaux sociaux se voit automatiquement appliquer un poids plus fort qu'un site ou un autre auteur qui recopie un contenu. On observe que le poids associé au site s'applique, au moins partiellement à toutes les pages du site. De même, le poids associé à un auteur s'applique, au moins partiellement, à tous les messages émis par cet auteur.

Du fait du lien entre le poids et la hiérarchie d'affichage, les sources originales de contenus sont ainsi favorisées.

Une source, par exemple un site ou un auteur de messages sur des réseaux sociaux se voit ainsi automatiquement appliquer un poids plus fort qu'un site ou un autre auteur qui recopie un contenu. On observe que le poids associé au site s'applique, au moins partiellement à toutes les pages du site. De même, le poids associé à un auteur s'applique, au moins partiellement, à tous les messages émis par cet auteur. Du fait du lien entre le poids et la hiérarchie d'affichage, les sources originales de contenus sont ainsi favorisées.

Préférentiellement, le procédé comporte aussi :
- une étape de saisie d'une pluralité de mots-clés par un utilisateur,
- une étape de détermination d'un contexte de recherche en fonction de la combinaison de mots-clés saisie,
- une étape de recherche de pages accessibles sur un réseau et comportant au moins un mot associé à un dit mot-clé,
- une étape de détermination d'un contexte de résultat en fonction du contenu de la page,
- une étape de hiérarchisation des résultats de la recherche en fonction de la correspondance du contexte de la recherche et du contexte de chaque résultat de la recherche et
- une étape d'affichage de résultats hiérarchisés.

L'utilisateur n'a ainsi pas à spécifier la signification particulière d'un mot lorsque ce mot possède plusieurs significations.

Pour implémenter le procédé objet de la présente invention, on met en oeuvre un dispositif de fourniture rapide d'information pertinente, qui comporte :
- un moyen de saisie d'au moins un mot-clé principal par un utilisateur,
- un moyen de recherche de pages accessibles sur un réseau et comportant au moins un mot associé à un dit mot-clé principal,
- un premier moyen de hiérarchisation des résultats de la recherche,
- un moyen d'affichage de résultats de la recherche possédant un niveau hiérarchique élevé attribué par le premier moyen de hiérarchisation,
- un moyen de sélection d'une information complémentaire par ledit utilisateur,
- un deuxième moyen de hiérarchisation des résultats de la recherche en fonction de ladite information complémentaire,
- un moyen d'affichage de résultats de la recherche possédant un niveau hiérarchique élevé attribué par le deuxième moyen de hiérarchisation,
- un moyen de groupement des résultats de la recherche en fonction de groupes de sources d'informations où est effectuée la recherche,
- un moyen de hiérarchisation des résultats de la recherche, dans chaque groupe de résultats correspondant aux différents groupes de sites,
- un moyen d'affichage séparé de chaque groupe résultats,
- un moyen de détermination de la copie d'une information depuis une source accessible sur un réseau vers une autre,
- un moyen d'affectation, à la source dont est copiée ladite information, d'un poids supérieur à la source où est placée une copie de ladite information et
- un moyen de hiérarchisation des résultats de la recherche, mettant en oeuvre ledit poids de la source,
- un moyen de détermination d'un contexte de recherche en fonction de la combinaison de mots-clés saisie,
- un moyen de détermination d'un contexte de résultat en fonction du contenu de la page,
- un moyen de hiérarchisation des résultats de la recherche en fonction de la correspondance du contexte de la recherche et du contexte de chaque résultat de la recherche et
- un moyen d'affichage de résultats hiérarchisés.

Dans des variantes, on réalise une étape de sélection de sources d'information organisées par pays en une pluralité de groupes, par exemple au moins cinq et une étape d'affichage de l'information selon les groupes sélectionnés.

Dans des variantes, il est organisé une interactivité et une hiérarchie entre les groupes d'informations par pondération des résultats.

Dans des variantes, une sous-recherche indépendante peut être réalisée dans chacun des groupes, tout en conservant une hiérarchie entre les groupes.

Dans des variantes, il est possible de modifier le filtrage réalisé par l'utilisateur (par pays, par exemple) pour pouvoir réaliser des recherches suivant des points de vues différents.

Dans des variantes, au cours d'au moins une étape de hiérarchisation, l'information complémentaire correspond à profilage d'un type d'utilisateur suivant certains paramètres comme le sexe, l'âge, etc.

Dans des variantes, au cours de l'étape de sélection d'une information complémentaire, l'utilisateur sélectionne un résultat de la recherche, le procédé comportant une étape de détermination de préférence de l'utilisateur en fonction de son profil type et, au cours de la deuxième étape de hiérarchisation, chaque mot-clé secondaire possède un poids inférieur au poids de chaque mot-clé principal.

## Revendications

1. Procédé de fourniture rapide d'information pertinente, comportant une étape de saisie d'une pluralité de mots-clés par un utilisateur, **caractérisé en ce qu'**il comporte, en outre :
- une étape de détermination d'un contexte de recherche en fonction de la combinaison de mots-clés saisie,
- une étape (310) de recherche de pages accessibles sur un réseau et comportant au moins un mot associé à un dit mot-clé,
- une étape de détermination d'un contexte de résultat en fonction du contenu de la page,
- une étape (405) de détermination de la copie d'une information depuis une source d'informations accessible sur un réseau vers une autre source d'informations accessible sur ledit réseau,
- une étape (425) d'affectation, à la source dont est copiée ladite information, d'un poids supérieur à la source où est placée une copie de ladite information,
- une étape (315) de hiérarchisation des résultats de la recherche en fonction
de la correspondance du contexte de la recherche et du contexte de chaque résultat de la recherche et
du poids de la source ; et
- une étape (325) d'affichage de résultats hiérarchisés.

2. Procédé selon la revendication 1, dans lequel l'étape de détermination de contexte d'un résultat est fonction du contenu de la page du dit résultat.

3. Procédé selon l'une des revendications 1 ou 2, dans lequel l'étape de détermination de contexte d'un résultat est fonction du serveur hébergeant la page du dit résultat.

4. Procédé selon l'une des revendications 1 à 3, dans lequel, au cours de l'étape de détermination de contexte de recherche, on met en oeuvre une pondération des mots-clés principaux.

5. Procédé selon l'une des revendications 1 à 4, dans lequel l'étape (405) de détermination de la copie d'une information comporte :
- une étape (415) de mémorisation de l'information, d'un horodatage associé à ladite information et de la source de ladite information auprès de laquelle l'accès à ladite information a été obtenu et
- une étape (420) de comparaison d'informations mémorisées pour détecter des similitudes entre des informations et, en cas de détection de similitudes entre deux informations mémorisées, une étape d'affectation d'un poids plus élevée à la source associée à l'horodatage le plus antérieur.

6. Procédé selon la revendication 5, dans lequel, au cours de l'étape (420) de comparaison, on détecte des similitudes en fonction d'un nombre de caractères successifs semblables entre les dites informations.

7. Procédé selon l'une des revendications 5 ou 6, dans lequel, au cours de l'étape (420) de comparaison, on détecte des similitudes en fonction d'un taux de mots semblables entre les dites informations.

8. Procédé selon l'une des revendications 1 à 7, dans lequel, au cours de l'étape (425) d'affectation à la source dont est copiée l'information, le poids affecté à la source est une fonction croissante et non constante du nombre de copies de l'information déterminé au cours de l'étape de détermination de copie.

9. Procédé selon l'une des revendications 1 à 8, qui comporte :
- une étape de création de groupes de sources d'information accessibles sur un réseau,
- une étape (305) de saisie d'au moins un mot-clé principal par un utilisateur,
- l'étape (310) de recherche de pages dans lesdites sources d'information et comportant au moins un mot associé à un dit mot-clé principal,
- une étape (325) de groupement des résultats de la recherche en fonction des groupes de sources d'informations où les résultats sont obtenus,
- l'étape (315) de hiérarchisation des résultats de la recherche, dans chaque groupe de résultats correspondant aux différents groupes de sources d'information en fonction du poids de la source et
- l'étape (325) d'affichage séparé de chaque groupe de résultats.

10. Procédé selon la revendication 9, dans lequel l'étape de création de groupes de sites est fonction d'informations présentes sur lesdits sites, l'étape de groupement de résultats mettant en oeuvre les dits groupes de sites.

11. Procédé selon l'une des revendications 1 à 10, qui comporte, après l'étape d'affichage de résultats de ladite étape de recherche :
- une étape de sélection d'une information complémentaire par ledit utilisateur,
- une deuxième étape de hiérarchisation des résultats de la recherche en fonction de ladite information complémentaire et
- une étape d'affichage de résultats de ladite étape de recherche possédant un niveau hiérarchique élevé lors de la deuxième étape de hiérarchisation.

12. Procédé selon la revendication 11, dans lequel, au cours de l'étape de sélection d'une information complémentaire, l'utilisateur sélectionne un résultat de la recherche, le procédé comportant une étape de détermination de mots-clés secondaire en fonction du résultat sélectionnée et, au cours de la deuxième étape de hiérarchisation, chaque mot-clé secondaire possède un poids inférieur au poids de chaque mot-clé principal.

13. Procédé selon l'une des revendications 1 à 12, qui comporte :
- une étape de groupement des résultats de la recherche en fonction de groupes de sources d'informations où est effectuée la recherche,
- une étape de hiérarchisation des résultats de la recherche, dans chaque groupe de résultats correspondant aux différents groupes de sites et
- une étape d'affichage séparé de chaque groupe résultats.

14. Procédé selon la revendication 13, qui comporte une étape de groupement de sites en fonction d'informations présentes sur lesdits sites, l'étape de groupement de résultats mettant en oeuvre les dits groupes de sites.

15. Dispositif de fourniture rapide d'information pertinente comportant un moyen de saisie d'une pluralité de mots-clés par un utilisateur, **caractérisé en ce qu'**il comporte, en outre :
- un moyen de détermination d'un contexte de recherche en fonction de la combinaison de mots-clés saisie,
- un moyen de recherche de pages accessibles sur un réseau et comportant au moins un mot associé à un dit mot-clé,
- un moyen de détermination d'un contexte de résultat en fonction du contenu de la page,
- un moyen de détermination de la copie d'une information depuis une source d'informations accessible sur un réseau vers une autre source d'informations accessible sur ledit réseau,
- un moyen d'affectation, à la source dont est copiée ladite information, d'un poids supérieur à la source où est placée une copie de ladite information,
- un moyen de hiérarchisation des résultats de la recherche en fonction
de la correspondance du contexte de la recherche et du contexte de chaque résultat de la recherche et
du poids de la source ; et
- un moyen d'affichage de résultats hiérarchisés.

## Patentansprüche

1. Verfahren zur raschen Lieferung von relevanten Informationen, umfassend einen Erfassungsschritt einer Vielzahl von Schlüsselwörtern durch einen Nutzer, **dadurch gekennzeichnet, dass** es darüber hinaus umfasst:
- einen Bestimmungsschritt eines Suchkontextes in Abhängigkeit von der Kombination von Eingabe-Schlüsselwörtern,
- einen Schritt (310) zur Suche von zugänglichen Seiten in einem Netz und umfassend wenigstens ein einem genannten Schlüsselwort zugeordnetes Wort,
- einen Bestimmungsschritt eines Ergebniskontextes in Abhängigkeit von dem Inhalt der Seite,
- einen Schritt (405) zur Bestimmung der Kopie einer Information ausgehend von einer in einem Netz zugänglichen Informationsquelle zu einer anderen in dem genannten Netz zugänglichen Informationsquelle,
- einen Schritt (425) zur Zuordnung eines höheren Gewichts als die Quelle, in der eine Kopie der genannten Information platziert ist, zu der Quelle, deren genannte Information kopiert ist,
- einen Schritt (315) zur Hierarchisierung der Ergebnisse der Suche in Abhängigkeit von der Entsprechung des Kontextes der Suche und des Kontextes jedes Ergebnisses der Suche und
von dem Gewicht der Quelle; und
- einen Schritt (325) zur Anzeige von hierarchisierten Ergebnissen.

2. Verfahren gemäß Anspruch 1, bei dem der Bestimmungsschritt des Kontextes eines Ergebnisses von dem Inhalt der Seite des genannten Ergebnisses abhängt.

3. Verfahren gemäß irgendeinem der Ansprüche 1 oder 2, bei dem der Bestimmungsschritt des Kontextes eines Ergebnisses von dem Server, der die Seite des genannten Ergebnisses beherbergt, abhängt.

4. Verfahren gemäß einem der Ansprüche 1 bis 3, bei dem im Verlauf des Bestimmungsschritts eines Suchkontextes eine Gewichtung der wichtigsten Schlüsselwörter umgesetzt ist.

5. Verfahren gemäß einem der Ansprüche 1 bis 4, bei dem der Schritt (405) zur Bestimmung der Kopie einer Information umfasst:
- einen Schritt (415) zur Speicherung der Information, einen Zeitstempel, der der genannten Information und der Quelle der genannten Information zugeordnet ist, nachdem der genannte Zugang zu der genannten Information erhalten wurde, und
- einen Schritt (420) zum Vergleich von gespeicherten Informationen zum Detektieren der Ähnlichkeiten zwischen den Informationen und für den Fall des Detektierens von Ähnlichkeiten zwischen zwei gespeicherten Informationen einen Zuordnungsschritt eines höheren Gewichts zu der Quelle, die dem ältesten Zeitstempel zugeordnet ist.

6. Verfahren gemäß Anspruch 5, bei dem im Verlauf des Schritts (420) zum Vergleichen Ähnlichkeiten in Abhängigkeit von einer Anzahl von sukzessiven ähnlichen Zeichen zwischen den genannten Informationen detektiert sind.

7. Verfahren gemäß einem der Ansprüche 5 oder 6 bei dem im Verlauf des Schritts (420) zum Vergleichen Ähnlichkeiten in Abhängigkeit von einer Rate von ähnlichen Worten zwischen den genannten Informationen detektiert sind.

8. Verfahren gemäß einem der Ansprüche 1 bis 7, bei dem im Verlauf des Schritts (425) zur Zuordnung zu der Quelle, deren Information kopiert ist, das der Quelle zugeordnete Gewicht eine ansteigende und nicht konstante Funktion der Anzahl von Kopien der Information ist, die im Verlauf des Bestimmungsschritts der Kopie bestimmt ist.

9. Verfahren gemäß einem der Ansprüche 1 bis 8, das umfasst:
- einen Schritt zum Anlegen von Gruppen von Informationsquellen, die in einem Netz verfügbar sind,
- einen Schritt (305) zum Erfassen wenigstens eines Hauptschlüsselwortes durch einen Nutzer,
- den Schritt (310) zur Suche von Seiten in den genannten Informationsquellen und umfassend wenigstens ein einem genannten Haupt-Schlüsselwort zugeordnetes Wort,
- einen Schlüssel (325) zum Zusammenfassen der Ergebnisse der Suche in Abhängigkeit von den Gruppen von Informationsquellen, in denen die Ergebnisse erhalten sind,
- den Schritt (315) der Hierarchisierung der Ergebnisse der Suche, bei dem jede Gruppe von Ergebnissen den unterschiedlichen Gruppen von Informationen in Abhängigkeit von dem Gewicht der Quelle entspricht; und
- den Schritt (325) zur getrennten Anzeige jeder Gruppe von Ergebnissen.

10. Verfahren gemäß Anspruch 9, bei dem der Schritt zum Anlegen von Site-Gruppen von Informationen abhängt, die in den genannten Sites vorhanden sind, wobei der Schritt zum Zusammenfassen von Ergebnissen die genannten Site-Gruppen umsetzt.

11. Verfahren gemäß einem der Ansprüche 1 bis 10, das nach dem Anzeigeschritt von Ergebnissen des genannten Suchschritts umfasst:
- einen Auswahlschritt einer zusätzlichen Information durch den genannten Nutzer,
- einen zweiten Schritt zur Hierarchisierung der Ergebnisse der Suche in Abhängigkeit von der genannten zusätzlichen Information und
- einen Anzeigeschritt von Ergebnissen des genannten Suchschritts, der ein hohes hierarchisches Niveau besitzt, bei dem zweiten Hierarchisierungsschritt.

12. Verfahren gemäß Anspruch 11, bei dem der Nutzer im Verlauf des Auswahlschritts einer zusätzlichen Information ein Ergebnis der Suche auswählt, wobei das Verfahren einen Bestimmungsschritt von sekundären Passwörtern in Abhängigkeit von dem ausgewählten Ergebnis umfasst und in jedes sekundäre Passwort im Verlauf des zweiten Hierarchisierungsschritts ein geringeres Gewicht als das Gewicht jedes Haupt-Passwortes besitzt.

13. Verfahren gemäß einem der Ansprüche 1 bis 12, das umfasst:
- einen Schritt zum Zusammenfassen der Ergebnisse der Suche in Abhängigkeit von den Gruppen von Informationsquellen, in denen die durchgeführt ist,
- einen Schritt der Hierarchisierung der Ergebnisse der Suche, bei dem jede Gruppe von Ergebnissen den unterschiedlichen Gruppen von Sites entspricht; und
- einen getrennten Anzeigeschritt jeder Gruppe von Ergebnissen.

14. Verfahren gemäß Anspruch 13, der einen Schritt zum Zusammenfassen von Sites in Abhängigkeit von Informationen umfasst, die auf den genannten Sites vorhanden sind, wobei der Schritt zum Zusammenfassen von Ergebnissen die genannten Site-Gruppen umsetzt.

15. Vorrichtung zur raschen Lieferung von relevanten Informationen, umfassend einen Erfassungsmittel einer Vielzahl von Schlüsselwörtern durch einen Nutzer, **dadurch gekennzeichnet, dass** es darüber hinaus umfasst:
- ein Bestimmungsmittel eines Suchkontextes in Abhängigkeit von der Kombination von Eingabe-Schlüsselwörtern,
- ein Mittel zur Suche von zugänglichen Seiten in einem Netz und umfassend wenigstens ein einem genannten Schlüsselwort zugeordnetes Wort,
- ein Bestimmungsmittel eines Ergebniskontextes in Abhängigkeit von dem Inhalt der Seite,
- ein Mittel zur Bestimmung der Kopie einer Information ausgehend von einer in einem Netz zugänglichen Informationsquelle zu einer anderen in dem genannten Netz zugänglichen Informationsquelle,
- ein Mittel zur Zuordnung eines höheren Gewichts als die Quelle, in der eine Kopie der genannten Information platziert ist, zu der Quelle, deren genannte Information kopiert ist,
- ein Mittel zur Hierarchisierung der Ergebnisse der Suche in Abhängigkeit von der Entsprechung des Kontextes der Suche und des Kontextes jedes Ergebnisses der Suche und
von dem Gewicht der Quelle; und
- ein Mittel zur Anzeige der hierarchisierten Ergebnisse.

## Claims

1. Method of providing relevant information rapidly, which comprises a step of a user entering a plurality of keywords, **characterized in that** it also comprises:
- a step of determining a search context as a function of the combination of keywords entered;
- a step (310) of searching for pages accessible on a network and comprising at least one word associated with one said keyword;
- a step of determining a result context as a function of the content of the page;
- a step (405) of determining the copying of an item of information from an information source accessible on a network to another information source accessible on said network;
- a step (425) of assigning a higher weight to the source from which said information is copied than to the source where a copy of said information is placed;
- a step (315) of hierarchizing the results of the search as a function of
the match between the context of the search and the context of each result of the search and
of the weight of the source; and
- a step (325) of displaying hierarchized results.

2. Method according to claim 1 wherein the step of determining the context of a result is a function of the content of the page of said result.

3. Method according to one of claims 1 or 2 wherein the step of determining the context of a result is a function of the server hosting the page of said result.

4. Method according to one of claims 1 to 3 wherein, during the step of determining a search context, a weighting of the main keywords is utilized.

5. Method according to one of claims 1 to 4 wherein the step (405) of determining the copying of an item of information comprises:
- a step (415) of memorizing the information, a timestamp associated with said information, and the source of said information from which access to said information was obtained; and
- a step (420) of comparing memorized information to detect similarities between the information and, if similarities between two items of information are detected, a step of assigning a higher weight to the source associated to the earliest timestamp.

6. Method according to claim 5 wherein, during the comparison step (420), similarities are detected as a function of the number of successive similar characters between said items of information.

7. Method according to one of claims 5 or 6 wherein, during the comparison step (420), similarities are detected as a function of a level of similar words between said items of information.

8. Method according to one of claims 1 to 7 wherein, during the step (425) of assigning to the source from which the information was copied, the weight assigned to the source is an increasing, non-constant function of the number of copies of the item of information determined during the copy determination step.

9. Method according to one of claims 1 to 8, which comprises:
- a step of creating groups of sources of information accessible on a network;
- a step (305) of inputting at least one main keyword by a user;
- the step (310) of searching for pages in said information sources and comprising at least one word associated with one said main keyword;
- a step (325) of grouping results of the search as a function of groups of information sources from which the results are obtained;
- the step (315) of hierarchizing the results of the search, in each group of results matching the various groups of information sources as a function of the weight of the source; and
- the step (325) of separately displaying each group of results.

10. Method according to claim 9 wherein the step of creating groups of sites is a function of information present on said sites, the step of grouping results utilizing said groups of sites.

11. Method according to one of claims 1 to 10, which comprises, after the step of displaying results from said search step:
- a step of selecting an additional item of information by said user;
- a second step of hierarchizing the results of the search as a function of said additional item of information; and
- a step of displaying results from said search step having a high hierarchical level in the second hierarchization step.

12. Method according to claim 11 wherein, during the step of selecting an additional item of information, the user selects a search result, the method comprising a step of determining secondary keywords as a function of the result selected and, during the second hierarchization step, each secondary keyword has a lower weight than the weight of each main keyword.

13. Method according to one of claims 1 to 12, which comprises:
- a step of grouping results of the search as a function of groups of information sources where the search is carried out;
- a step of hierarchizing the results of the search, in each group of results corresponding to the various groups of sites; and
- a step of separately displaying each group of results.

14. Method according to claim 13, which comprises a step of grouping sites as a function of information present on said sites, the step of grouping results utilizing said groups of sites.

15. Device for providing relevant information rapidly, which comprises a means for a user to enter a plurality of keywords, **characterized in that** it also comprises:
- a means for determining a search context as a function of the combination of keywords entered;
- a means for searching for pages accessible on a network and comprising at least one word associated with one said keyword;
- a means for determining a result context as a function of the content of the page;
- a means for determining the copying of an item of information from an information source accessible on a network to another information source accessible on said network;
- a means for assigning a higher weight to the source from which said information is copied than to the source where a copy of said information is placed;
- a means for hierarchizing the results of the search as a function of
the match between the context of the search and the context of each result of the search and
of the weight of the source; and
- a means for displaying hierarchized results.
